# EUROPEAN PATENT APPLICATION

(11) **EP 1 742 127 A2**
(43) Date of publication of application: **10.01.2007**
(21) Application number: 06012673.7
(22) Date of filing: 20.06.2006
(51) Int. Cl.: G05B 19/19, B21D 24/10

(54) **Device for judging collision of a die cushion mechanism and system for judging collision**

(30) Priority: 04.07.2005 JP 2005195097
(71) Applicant: FANUC LTD, Minamitsuru-gun, Yamanashi 401-0597 (JP)
(72) Inventor: Iwashita, Yasusuke, Yamanashi 403-0003 (JP); Okita, Tadashi, Yamanashi 401-0005 (JP); Kwamura, Hiroyuki, Minamitsuru-gun Yamanashi 401-0301 (JP); Ikai, Satoshi FANUC Dai3virakaramatsu,, Minamitsuru-gun Yamanashi 401-0511 (JP)
(74) Representative: Thum, Bernhard

(57) **Abstract**

A device (110) for judging the collision of a slide (24) with a die cushion in a die cushion mechanism (20) which produces a force against the slide in a press machine using a servo motor (18) as a drive source, comprising force detection means (21) for detecting a force produced between the die cushion and the slide; and comparator means (95) for comparing a force detection value (Fd) detected by the force detection means with a predetermined threshold value (L1); wherein, when the force detection value becomes greater than the threshold value, it is so judged that the slide has come into collision with the die cushion. Thus, the collision is judged within a short period of time and reliably. The collision may be judged by comparing differentiated values (Fd', Fd") of the force detection value, slide position detection value (Y1d) or slide position instruction value (Y1c) or other related threshold values. There can be further used a system for judging a collision which executes a plurality of methods for judging the collision.

## Description

### BACKGROUND OF THE INVENTION

### 1. Field of the Invention

The present invention relates to a device for judging the collision of a slide with a die cushion in a die cushion mechanism and a system for judging the collision.

### 2. Description of the Related Art

In a press machine for effecting press work such as bending, drawing or punching, it is a known practice to install a die cushion mechanism as an accessory unit for applying a predetermined force (pressure) from the side of a support member (usually called bolster) that supports a second mold to another support member (usually called slide) of the moving side that supports a first mold used for the press work during the working operation. The die cushion mechanism is usually so constituted that a cushion pad moves together with a slide while applying a force (pressure) to the slide after the slide (or the first mold) moving in a direction of closing the mold is brought into direct or indirect collision with a moving element (usually called cushion pad) and is held with a predetermined pressure until the mold is opened after the mold is closed (molding). During this period, the peripheral region of a working portion of a material to be worked is held between the cushion pad and the slide to prevent the occurrence of wrinkles in the material to be worked.

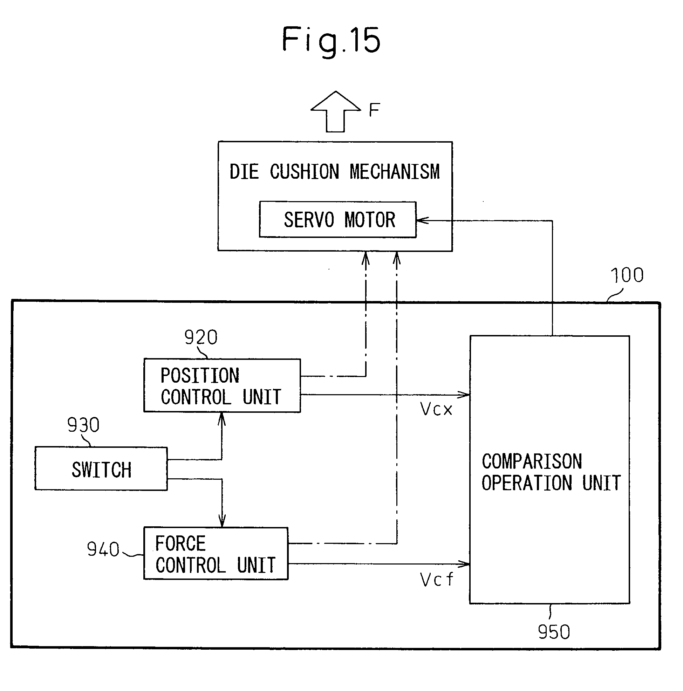

Fig. 15 is a functional block diagram of a control device for the die cushion mechanism according to a prior art. A position control unit 920 and a force control unit 940 in the control device 100 produce a position control speed instruction value Vcx and a force control speed instruction value Vcf based on their respective predetermined control systems. The position control speed instruction value Vcs and the force control speed instruction value Vcf are, then, fed to a comparison operation unit 950. The comparison operation unit 950 compares the downward magnitudes of the position control speed instruction value Vcs and of the force control speed instruction value Vcf, i.e., compares the speeds in the direction in which the slide moves down toward the cushion pad. When it is judged, for example, that the position control speed instruction value Vcs is greater, a switch 930 is so changed over that the die cushion is controlled by the position control unit 920. When it is judged that the force control speed instruction value Vcf is greater, the switch 930 is so changed over that the die cushion is controlled by the force control unit 940.

Here, the slide in the die cushion mechanism at first stands by at its upper-limit position. In the initial period of the sliding operation, the position control speed instruction value Vcx is greater than the force control speed instruction value Vcf. Therefore, due to the switch 930, the die cushion starts moving down based on the position control speed instruction value Vcx fed from the position control unit 920. The comparison processing by the comparison operation unit 950 is repetitively executed while the slide is moving down. When the force control speed instruction value Vcf becomes greater than the position control speed instruction value Vcx, it is so judged that the slide has come into collision with the die cushion, and the position control unit 920 is switched over to the force control unit 940 by the switch 930. Therefore, the die cushion moves down based on the force control speed instruction value Vcf of the force control unit 940 to produce a suitable cushion pressure.

Here, when the slide is going to come into collision with the die cushion, the slide, first, comes into contact with a cushion pin whereby the slide and a cushion pad move down integrally and together. When the force of the cushion pad acting on the damper increases, the cushion pin further moves down, and the bolster of the die cushion comes into collision with the slide via their respective molds.

Therefore, while the slide is moving down together with the cushion pad, an extended period of time is required for forming the force control speed instruction value Vcf and the position control speed instruction value Vcx, and it becomes difficult to quickly judge the collision by comparing them. As a result, a very extended period of time is often required until the collision is judged after the collision has actually occurred. Such a delay in the judgement of collision results in an increase in the overshooting amount of the force. It is, therefore, desired to quickly judge the collision.

Also, an incorrect judgement of collision may render the die cushion mechanism to be in a state where the press work can no longer be executed. Therefore, it is necessary to reliably judge the collision of the slide with the cushion pad.

### SUMMARY OF THE INVENTION

The present invention was accomplished in view of the above-mentioned circumstances, and has an object of providing a device, for judging the collision of a die cushion mechanism, which is capable of judging the collision between the slide and the cushion pad within a short period of time and reliably, and a system for judging the collision.

In order to achieve the above object according to a first aspect of the present invention, there is provided a device for judging the collision of a slide with a die cushion in a die cushion mechanism which produces a force against the slide in a press machine using a servo motor, as a drive source, comprising:
force detection means for detecting a force produced between the die cushion and the slide; and
comparator means for comparing a force detection value detected by the force detection means with a predetermined threshold value;
wherein when the force detection value becomes greater than the threshold value, it is so judged that the slide has come into collision with the die cushion.

According to a second aspect of the present invention, there is provided a device for judging the collision of a slide with a die cushion in a die cushion mechanism which produces a force against the slide in a press machine using a servo motor as a drive source, comprising:
force detection means for detecting a force produced between the die cushion and the slide; and
comparator means for comparing a force detection value detected by the force detection means with a force detection value before the operation detected by the force detection means before the operation of the die cushion;
wherein, when the force detection value becomes greater than the force detection value before the operation, it is so judged that the slide has come into collision with the die cushion.

According to a third aspect of the present invention, there is provided a device for judging the collision of a slide with a die cushion in a die cushion mechanism which produces a force against the slide in a press machine using a servo motor as a drive source, comprising:
force detection means for detecting a force produced between the die cushion and the slide; and
comparator means for comparing a first-order differentiated value of the force detection value detected by the force detection means with a predetermined threshold value;
wherein, when the first-order differentiated value becomes greater than the threshold value, it is so judged that the slide has come into collision with the die cushion.

According to a fourth aspect of the present invention, there is provided a device for judging the collision of a slide with a die cushion in a die cushion mechanism which produces a force against the slide in a press machine using a servo motor as a drive source, comprising:
force detection means for detecting a force produced between the die cushion and the slide; and
comparator means for comparing a second-order differentiated value of the force detection value detected by the force detection means with a predetermined threshold value;
wherein when the second-order differentiated value becomes greater than the threshold value, it is so judged that the slide has come into collision with the die cushion.

According to a fifth aspect of the present invention, there is provided a device for judging the collision of a slide with a die cushion in a die cushion mechanism which produces a force against the slide in a press machine using a servo motor as a drive source, comprising:
force instruction means for instructing a force to be produced between the die cushion and the slide;
force detection means for detecting a force produced between the die cushion and the slide; and
comparator means for comparing a force detection value detected by the force detection means with a force instruction value instructed by the force instruction means;
wherein, when the force detection value becomes greater than the force instruction value, it is so judged that the slide has come into collision with the die cushion.

That is, the first aspect judges the collision by detecting a force detection value only and by comparing it with a predetermined threshold value, the second aspect judges the collision by detecting a force detection value only and by comparing it with a force detection value, of before the operation, that has been detected in advance, the third aspect judges the collision by detecting a force detection value only and by comparing it, after having put it through first-order differentiation, with a predetermined threshold value, the fourth aspect judges the collision by detecting a force detection value only and by comparing it, after having put it through second-order differentiation, with a predetermined threshold value, and the fifth aspect judges the collision by detecting a force detection value only and by comparing it with a force instruction value. In the first to fifth aspects, therefore, there is no need to use the force control speed instruction value and the position control speed instruction value at the time of judging the collision, and the collision can be judged within a short period of time.

According to a sixth aspect of the present invention, there is provided a device for judging the collision of a slide with a die cushion in a die cushion mechanism which produces a force against the slide in a press machine using a servo motor as a drive source, comprising:
speed detection means for detecting a speed of the die cushion; and
comparator means for comparing a speed detection value detected by the speed detection means with a predetermined threshold value;
wherein, when the speed detection value becomes greater than the threshold value, it is so judged that the slide has come into collision with the die cushion.

According to a seventh aspect of the present invention, there is provided a device for judging the collision of a slide with a die cushion in a die cushion mechanism which produces a force for the slide in a press machine using a servo motor as a drive source, comprising:
speed detection means for detecting a speed of the die cushion; and
comparator means for comparing a first-order differentiated value of the speed detection value detected by the speed detection means with a predetermined threshold value;
wherein when the first-order differentiated value becomes greater than the threshold value, it is so judged that the slide has come into collision with the die cushion.

According to an eight aspect of the present invention, there is provided a device for judging the collision of a slide with a die cushion in a die cushion mechanism which produces a force against the slide in a press machine using a servo motor as a drive source, comprising:
acceleration detection means for detecting an acceleration of the die cushion; and
comparator means for comparing an acceleration detection value detected by the acceleration detection means with a predetermined threshold value;
wherein when the acceleration detection value becomes greater than the threshold value, it is so judged that the slide has come into collision with the die cushion.

That is, the sixth aspect judges the collision by detecting a speed detection value only and by comparing it with a predetermined threshold value, the seventh aspect judges the collision by detecting a speed detection value only and by comparing it, after having put it through first-order differentiation, with a predetermined threshold value, and the eighth aspect judges the collision by detecting an acceleration detection value only and by comparing it with a predetermined threshold value. In the sixth to eighth aspects, therefore, there is no need of using the force control speed instruction value and the position control speed instruction value at the time of judging the collision, and the collision can be judged within a short period of time.

According to a ninth aspect of the present invention, there is provided a device for judging the collision of a slide with a die cushion in a die cushion mechanism which produces a force against the slide in a press machine using a servo motor as a drive source, comprising:
slide position detection means for detecting a position of the slide; and
comparator means for comparing a slide position detection value detected by the slide position detection means with a predetermined threshold value;
wherein, when the slide position detection value becomes smaller than the threshold value, it is so judged that the slide has come into collision with the die cushion.

According to a tenth aspect of the present invention, there is provided a device for judging the collision of a slide with a die cushion in a die cushion mechanism which produces a force against the slide in a press machine using a servo motor as a drive source, comprising:
slide position instruction means for instructing a position of the slide; and
comparator means for comparing a slide position instruction value instructed by the slide position instruction means with a predetermined threshold value;
wherein when the slide position instruction value becomes smaller than the threshold value, it is so judged that the slide has come into collision with the die cushion.

According to an eleventh aspect of the present invention, there is provided a device for judging the collision of a slide with a die cushion in a die cushion mechanism which produces a force against the slide in a press machine using a servo motor as a drive source, comprising:
distance detection means for detecting a distance between the die cushion and the slide; and
comparator means for comparing a distance detected by the distance detection means with a predetermined threshold value;
wherein when the distance becomes smaller than the threshold value, it is judged that the slide has come into collision with the die cushion.

According to a twelfth aspect of the present invention, there is provided a device for judging the collision of a slide with a die cushion in a die cushion mechanism which produces a force against the slide in a press machine using a servo motor as a drive source, comprising:
slide position detection means for detecting a position of the slide;
die cushion position detection means for detecting a position of the die cushion; and
comparator means for comparing a slide position detection value detected by the slide position detection means with a die cushion position detection value detected by the die cushion position detection means;
wherein when the slide position detection value becomes smaller than the die cushion position detection value, it is judged that the slide has come into collision with the die cushion.

According to a thirteenth aspect of the present invention, there is provided a device for judging the collision of a slide with a die cushion in a die cushion mechanism which produces a force against the slide in a press machine using a servo motor as a drive source, comprising:
slide position detection means for detecting a position of the slide;
die cushion position detection means for detecting a position of the die cushion; and
comparator means for comparing a slide position detection value detected by the slide position detection means with a die cushion position detection value detected by the die cushion position detection means;
wherein, when the slide position detection value becomes in agreement with the die cushion position detection value, it is so judged that the slide has come into collision with the die cushion.

According to a fourteenth aspect of the present invention, there is provided a device for judging the collision of a slide with a die cushion in a die cushion mechanism which produces a force against the slide in a press machine using a servo motor as a drive source, comprising:
slide position instruction means for instructing a position of the slide;
die cushion position instruction means for instructing a position of the die cushion; and
comparator means for comparing a slide position instruction value instructed by the slide position instruction means with a die cushion position instruction value instructed by the die cushion position instruction means;
wherein, when the slide position instruction value becomes smaller than the die cushion position instruction value, it is so judged that the slide has come into collision with the die cushion.

According to a fifteenth aspect of the present invention, there is provided a device for judging the collision of a slide with a die cushion in a die cushion mechanism which produces a force against the slide in a press machine using a servo motor as a drive source, comprising:
slide position instruction means for instructing a position of the slide;
die cushion position instruction means for instructing a position of the die cushion; and
comparator means for comparing a slide position instruction value instructed by the slide position instruction means with a die cushion position instruction value instructed by the die cushion position instruction means;
wherein, when the slide position instruction value becomes in agreement with the die cushion position instruction value, it is so judged that the slide has come into collision with the die cushion.

That is, the ninth aspect judges the collision by detecting a slide position detection value only and by comparing it with a predetermined threshold value, the tenth aspect judges the collision by using a slide position instruction value only and by comparing it with a predetermined threshold value, the eleventh aspect judges the collision by detecting only a distance between the slide and the die cushion, and by comparing it with a predetermined threshold value, the twelfth and thirteenth aspects judge the collision by detecting a slide position detection value and a die cushion position detection value, and by comparing them with each other, and the fourteenth and fifteenth aspects judge the collision by using a slide position instruction value and a die cushion position instruction value, and by comparing them with each other. In the ninth to fifteenth aspects, therefore, there is no need of using the force control speed instruction value or the position control speed instruction value at the time of judging the collision, and the collision can be judged within a short period of time.

According to a sixteenth aspect of the present invention, there is provided a system for judging the collision, comprising:
at least any one of the devices for judging the collision of first to fifteenth aspects; and
at least another one of the devices for judging the collision of first to fifteenth aspects;
wherein when the at least any one of the devices for judging the collision and the at least another one of the devices for judging the collision have rendered the judgement to have collided, it is so judged that the slide has come into collision with the die cushion.

That is, in the sixteenth aspect, as there are two devices for judging the collision, the collision can be positively judged, without occurring erroneous judgements.

According to a seventeenth aspect of the present invention, there is provided a system for judging the collision, comprising:
any one of the devices for judging the collision of first to fifteenth aspects;
another one of the devices for judging the collision of first to fifteenth aspects; and
switching means for changing a position control unit that controls the slide depending upon a position of the slide over to a force control unit that controls the slide depending upon a force acting on the slide;
wherein when the another one of the devices for judging the collision has not rendered the judgement of collision after the switching means has changed the position control unit over to the force control unit as a result of the judgement of collision rendered by the any one of the devices for judging the collision, it is so judged that the slide has not colliding with the die cushion, and the switching means changes the force control unit over to the position control unit.

That is, in the seventeenth aspect, when any one device for judging the collision has rendered the judgement of collision, the position control is changed over to the force control by the switching operation, making it possible to execute the switching operation more quickly than in the sixteenth embodiment. When another one of the devices for judging the collision has not rendered the judgement of collision after the changer over, the force control is returned back to the position control to prevent the occurrence of an erroneous judgement.

The above objects, features and advantages as well as other objects, features and advantages of the invention will become obvious from the detailed description of the typical embodiments of the invention shown in the accompanying drawings.

### BRIEF DESCRIPTION OF THE DRAWINGS

Fig. 1a is a view illustrating a basic constitution of a die cushion mechanism in a press machine equipped with a control device according to the present invention, and shows a state where the press machine is opened;
Fig. 1b is a view illustrating the basic constitution of the die cushion mechanism in the press machine equipped with the control device according to the present invention, and shows a state where the press machine is closed;
Fig. 2 is a functional block diagram illustrating the control device for the die cushion mechanism according to a first embodiment of the present invention;
Fig. 3a is a flowchart illustrating an operation for judging the collision of the control device according to the first embodiment of the invention;
Fig. 3b is another flowchart illustrating the operation for judging the collision of the control device according to the first embodiment of the invention;
Fig. 4a is a further flowchart illustrating the operation for judging the collision of the control device according to the first embodiment of the invention;
Fig. 4b is a still further flowchart illustrating the operation for judging the collision of the control device according to the first embodiment of the invention;
Fig. 5 is a yet further flowchart illustrating the operation for judging the collision of the control device according to the first embodiment of the invention;
Fig. 6 is a functional block diagram illustrating the control device for the die cushion mechanism according to a second embodiment of the present invention;
Fig. 7a is a flowchart illustrating an operation for judging the collision of the control device according to the second embodiment of the invention;
Fig. 7b is another flowchart illustrating the operation for judging the collision of the control device according to the second embodiment of the invention;
Fig. 8 is a further flowchart illustrating the operation for judging the collision of the control device according to the second embodiment of the invention;
Fig. 9 is a functional block diagram illustrating the control device for the die cushion mechanism according to a third embodiment of the present invention;
Fig. 10a is a flowchart illustrating the operation for judging the collision of the control device according to the third embodiment of the invention;
Fig. 10b is another flowchart illustrating the operation for judging the collision of the control device according to the third embodiment of the invention;
Fig. 11a is a further flowchart illustrating the operation for judging the collision of the control device according to the third embodiment of the invention;
Fig. 11b is a still further flowchart illustrating the operation for judging the collision of the control device according to the third embodiment of the invention;
Fig. 12 is a yet further flowchart illustrating the operation for judging the collision of the control device according to the third embodiment of the invention;
Fig. 13 is a flowchart illustrating an operation of a system for judging the collision according to the present invention;
Fig. 14 is another flowchart illustrating the operation of the system for judging the collision according to the present invention; and
Fig. 15 is a functional block diagram illustrating a control device for a die cushion mechanism according to a

### prior art.

### DETAILED DESCRIPTION OF THE INVENTION

Embodiments of the invention will now be described with reference to the accompanying drawings. In the drawings, the same members are denoted by the same reference numerals. For easy understanding, the scale is suitably changed in each drawing.

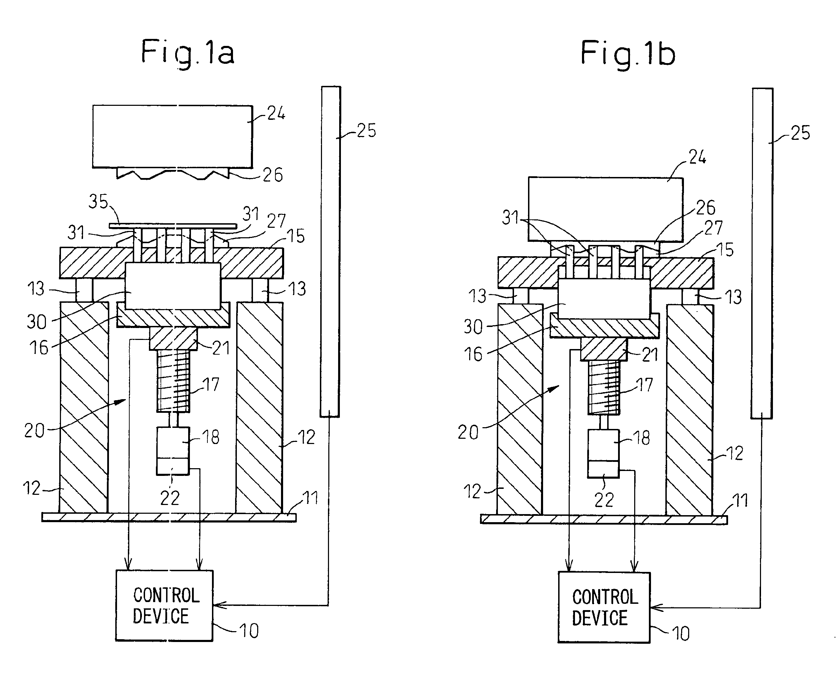

Figs. 1a and 1b are views illustrating a basic constitution of a die cushion mechanism 20 in a press machine equipped with a control device 10 according to the present invention, and show states where the press machine is opened and closed, respectively. As shown in the drawings, two support members 12 are extending in a vertical direction from a base 11, and a bolster 15, in the shape of a flat plate, is arranged at the ends of the support members 12 via dampers 13. As shown, a die cushion mechanism 20 is provided under the bolster 15.

The die cushion mechanism 20 according to the present invention includes an elastic element 30 that expands and contracts in the vertical direction relative to the lower surface of the bolster 15, a cushion pad 16 that is incorporated in the press machine and moves in correspondence with the motion of a slide 24 and a servo motor 18 for lifting and lowering the cushion pad 16. In the present invention, the elastic element 30 need not be used. In the following description, however, it is presumed that the elastic element 30 is being employed. As shown, the bottom surface of the elastic element 30 is held by the cushion pad 16. Here, the elastic element 30 may be an elastic material such as a rubber, a spring or a hydraulic chamber. Further, a plurality of cushion pins 31 extend from the top surface of the elastic element 30 and protrude beyond the bolster 15 by passing through the holes of the bolster 15. A material 35 to be worked is supported at the ends of the cushion pins 31.

The slide 24 supports a first mold 26 used for the press work. The slide 24 moves in a direction to approach, or move away from, a second mold 27 supported by the bolster 15 at a speed V required for the press work. Here, the slide 24 may be so constituted as to be moved by a servo motor separate from the servo motor 18.

The cushion pad 16 is arranged in relation to the second mold 27, and is connected to the output shaft of the servo motor 18 via a ball-screw device 17. The slide 24 (or the first mold 26), while moving in a direction to close the mold, comes into direct or indirect collision with the cushion pad 16 that is standing at a predetermined position. Usually, the cushion pad 16 is so constituted as to move together with the slide 24 while applying a predetermined force (pressure) F to the slide 24 from when the mold is closed (molding) until when the mold is opened. In this specification, the cushion pad 16 and the members related thereto are called a die cushion as necessary.

The above operation is conducted, by the control device 10 for the press machine, based on the present invention. The operation of the press machine will now be concretely described with reference to Figs. 1a and 1b. When the press machine is in operation, the slide 24 moves down, and the first mold 26 pushes down the plurality of cushion pins 31 via the material 35 to be worked. Therefore, the elastic element 30 is compressed in the vertical direction, and the cushion pad 16 is pushed downward. In response to the downward motion of the cushion pad 16, the servo motor 18 revolves to similarly lower the bolster 15. As the force (pressure) acting on the elastic element 30 increases, the cushion pins 31 are further lowered, and the material 35 to be worked is press-worked while being held between the first mold 26 of the slide 24 and the second mold 27 of the bolster 15. Here, the bolster 15 is slightly lowered by the slide 24. Next, after having arrived at the bottom dead center, the slide 24 starts rising, and the other members, too, return back to their initial positions to end the press work.

Thus, the control device 10 produces a correlative pressure (i.e., force F) between the cushion pad 16 and the slide 24 by controlling the servo motor 18. As will be learned from Figs. 1a and 1b, a force detection unit 21 for detecting this pressure (i.e., force F) is connected to the control device 10. Similarly, a speed detection unit 22 that detects the rotational speed of the servo motor 18 as a speed of the die cushion, too, is connected to the control device 10. Referring to Figs. 1a and 1b, a position detection unit 25 is arranged neighboring the support member 12, and is connected to the control device 10. The position detection unit 25 detects the position of the die cushion mechanism 20 in the vertical direction, particularly detects the position of the cushion pad 16 in the vertical direction and, further, detects the position of the slide 24 in the vertical direction. That is, the position detection unit 25 functions as the die cushion position detecting means and the slide position detecting means. The position detection unit 25 is, further, capable of detecting the distance between the slide 24 and the die cushion. Here, the force detection unit 21 may be a known force sensor, the speed detection unit 22 may be a known encoder, and the position detection unit 25 may be a known linear scale or an encoder (using a rack and a pinion gear). In an embodiment that is not shown, there may be separately provided a dedicated position detection unit (not shown) for detecting the position of the die cushion mechanism in the vertical direction and a dedicated position detection unit (not shown) for detecting the position of the slide 24 in the vertical direction. Though not shown, the control device 10 according to the present invention is equipped with a position control unit 920 and a switch 930 (see Fig. 15) which are the same as those of the prior art.

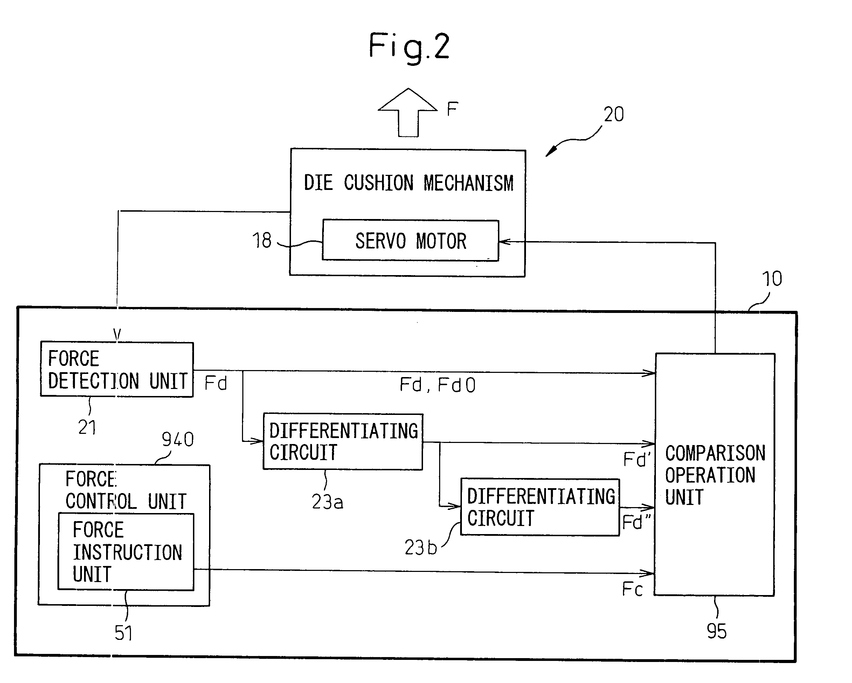

Fig. 2 is a functional block diagram illustrating the control device for the die cushion mechanism according to the first embodiment of the present invention. Referring to Fig. 2, the control device 10 based on the first embodiment includes a force instruction unit 51 included in a force control unit 940 and for instructing a force Fc to be produced for the die cushion mechanism 20, a force detection unit 21 for detecting a force Fd produced in the die cushion mechanism 20, and a first differentiating circuit 23a and a second differentiating circuit 23b connected to the force detection unit 21. The control device 10 further includes a comparison operation unit 95 which compares a force instruction value Fc instructed by the force instruction unit 51 in the force control unit 940, a force detection value Fd detected by the force detection unit 21, a first-order differentiated force detection value Fd' of the force detection value Fd put through first-order differentiation through the first-order differentiating circuit 23a and a second-order differentiated force detection value Fd" of the force detection value Fd put through second-order differentiation through the first-order differentiating circuit 23a and the second-order differentiating circuit 23b, with their respective threshold values or a force value Fd0 detected before the operation that will be described later.

As described above, the die cushion is, first, operated and controlled by the position control unit 920. When it is judged that the slide 24 has come into collision with the die cushion, a collision judgement signal is fed to the switch 930, and the die cushion is changed from being controlled by the position control unit 920 to being controlled by the force control unit 940.

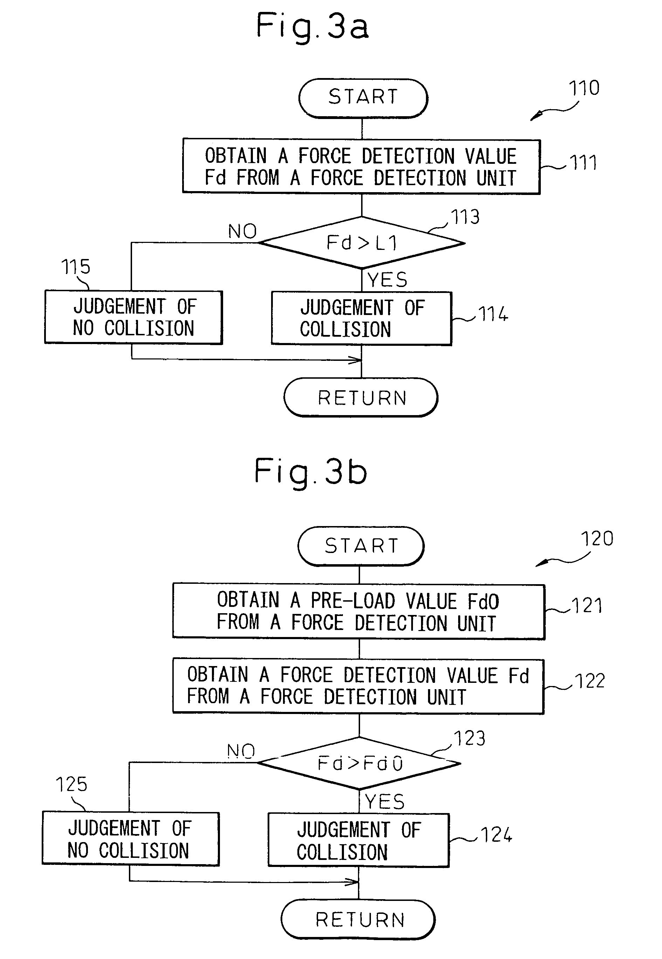

Described below with reference to Figs. 3a to 5 is how to judge the collision of the slide 24 with the die cushion by the control device 10 for the die cushion mechanism 20 according to the first embodiment of the invention. Programs (methods) 110 to 230 and programs 240 and 250 for judging the collision illustrated in the flowcharts of the drawings have been stored in advance in the storage unit (not shown) in the control device 10. The programs 110 to 230 for judging the collision are repetitively executed when the die cushion mechanism 20 is in operation.

In the program 110 for judging the collision shown in Fig. 3a, the force detection value Fd is obtained from the force detection unit 21 (step 111), and the comparison operation unit 95 compares the force detection value Fd with a threshold value L1 (step 113). The threshold value L1 and other threshold values that will be described later had been found, in advance, through experiment and stored in the storage unit in the control device 10. Next, when the force detection value Fd is greater than the threshold value L1, it is so judged that the slide 24 has collided with the die cushion (step 114). When the force detection value Fd is not greater than the threshold value L1, it is so judged that no collision has taken place (step 115).

In the program 120 for judging the collision shown in Fig. 3b, first, a pre-load value Fd0 is obtained from the force detection unit 21 (step 121). The pre-load value Fd0 is a force detection value detected by the force detection unit 21 when the slide 24 is not colliding with the die cushion or, concretely, before the cushion pin 31 comes in contact with the slide 24. After the force detection value Fd is obtained from the force detection unit 21 (step 122), the comparison operation unit 95 compares the force detection value Fd with the pre-load value Fd0 (step 123). Next, when the force detection value Fd is greater than the pre-load value Fd0, it is so judged that the slide 24 has collided with the die cushion (step 124). When the force detection value Fd is not greater than the pre-load value Fd0, it is so judged that no collision has taken place (step 125).

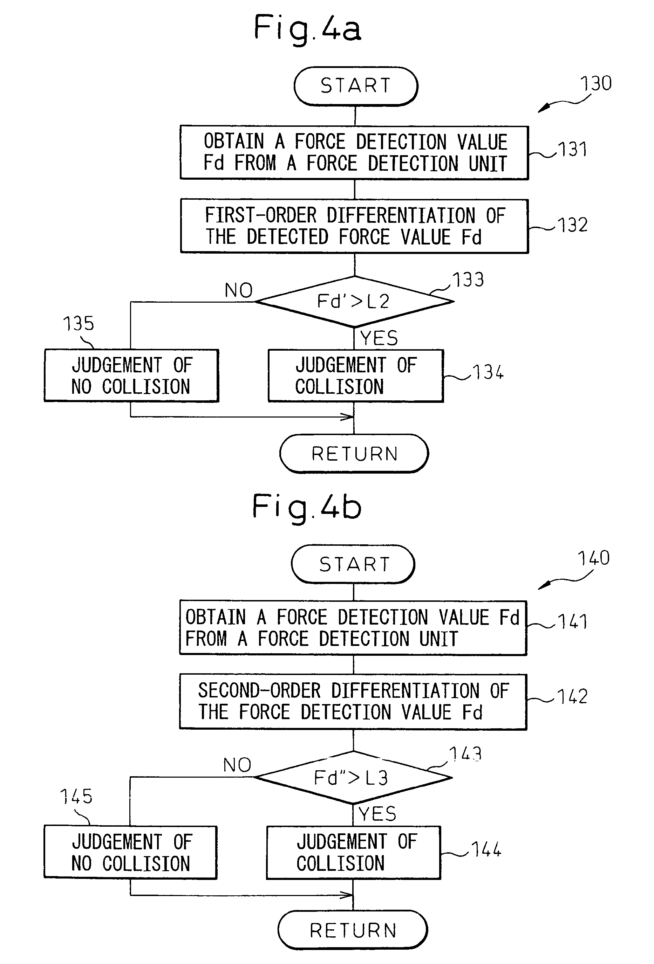

Further, in the program 130 for judging the collision shown in Fig. 4a, a force detection value Fd is obtained from the force detection unit 21 (step 131) and is put through first-order differentiation through the first-order differentiating circuit 23a. A first-order differentiated force detection value Fd' thus obtained is fed to the comparison operation unit 95 where it is compared with a threshold value L2 (step 133). Next, when the first-order differentiated force detection value Fd' is greater than the threshold value L2, it is judged that the slide 24 has collided with the die cushion (step 134). When the first-order differentiated force detection value Fd' is not greater than the threshold value F2, it is judged that no collision has taken place (step 135).

Similarly, in the program 140 for judging the collision shown in Fig. 4b, a force detection value Fd is obtained from the force detection unit 21 (step 141) and is put through second-order differentiation through the first-order differentiating circuit 23a and the second-order differentiating circuit 23b. A second-order differentiated force detection value Fd" thus obtained is fed to the comparison operation unit 95 where it is compared with a threshold value L3 (step 143). Next, when the second-order differentiated force detection value Fd" is greater than the threshold value L3, it is judged that the slide 24 has collided with the die cushion (step 144). When the second-order differentiated force detection value Fd" is not greater than the threshold value L3, it is so judged that no collision has taken place (step 145).

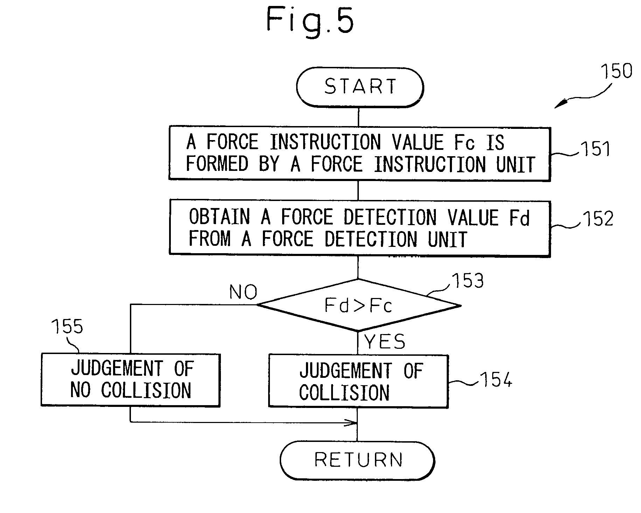

In the program 150 for judging the collision shown in Fig. 5, first, a force instruction value Fc is obtained from a force instruction unit 51 (step 151). After the force detection value Fd is obtained from the force detection unit 21 (step 152), the comparison operation unit 95 compares the force detection value Fd with the force instruction value Fc (step 153). Next, when the force detection value Fd is greater than the force instruction value Fc, it is judged that the slide 24 has collided with the die cushion (step 154). When the force detection value Fd is not greater than the force instruction value Fc, it is judged that no collision has taken place (step 155).

When the judgement is of collision rendered by the methods 110 to 150 of the first embodiment, the die cushion is changed by the switch 930 from being controlled by the position control unit 920 over to being controlled by the force control unit 940. As a result, a suitable cushion pressure is produced.

According to the first embodiment of the present invention as described above, the position control speed instruction value Vcx is not compared with the force control speed instruction value Vcf unlike that of the prior art. When the cushion pad is being lowered as described above, it becomes difficult to judge the collision based on the comparison of the force control speed instruction value Vcf with the position control speed instruction value Vcx, and the judgement of collision involves a delay. However, the first embodiment makes it possible to judge the collision within a short period of time since it uses neither the force control speed instruction value Vcf nor the position control speed instruction value Vcx. As a result, the first embodiment makes it possible to prevent an increase in the overshooting amount of the force that stems from a delay in the judgement of collision.

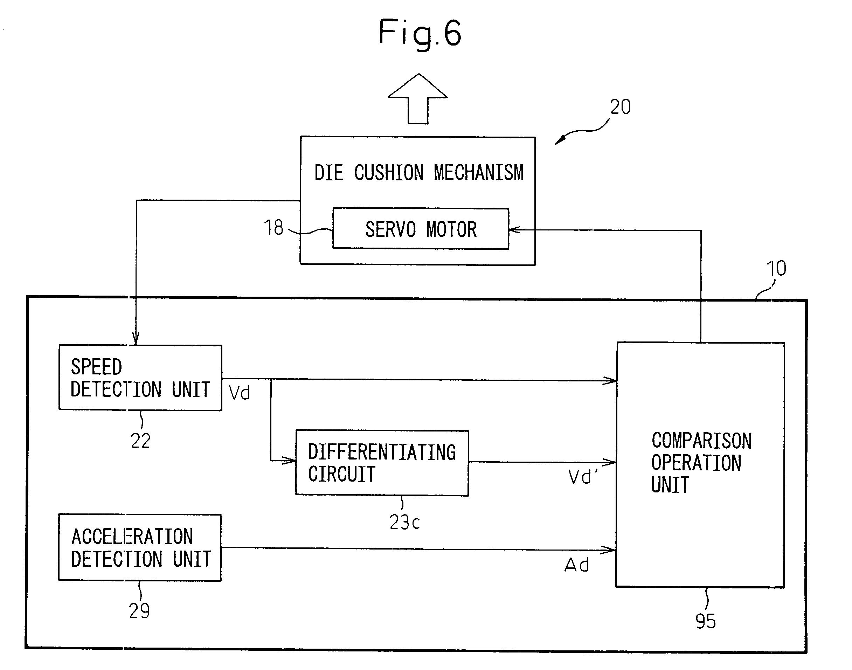

Fig. 6 is a functional block diagram illustrating the control device for the die cushion mechanism according to a second embodiment of the present invention. Referring to Fig. 6, the control device 10 based on the second embodiment includes a speed detection unit 22 for detecting a speed of the die cushion, a third differentiating circuit 23c connected to the speed detection unit 22, and an acceleration detection unit 29 (not shown in Fig. 1) for detecting the acceleration of the die cushion. The control device 10 further includes a comparison operation unit 95 which compares a speed detection value Vd of the die cushion detected by the speed detection unit 22, a first-order differentiated speed detection value Vd' of the speed detection value Vd put to the first-order differentiation through the third differentiating circuit 23c and an acceleration detection value Ad of the die cushion detected by the acceleration detection unit 29, with their respective threshold values.

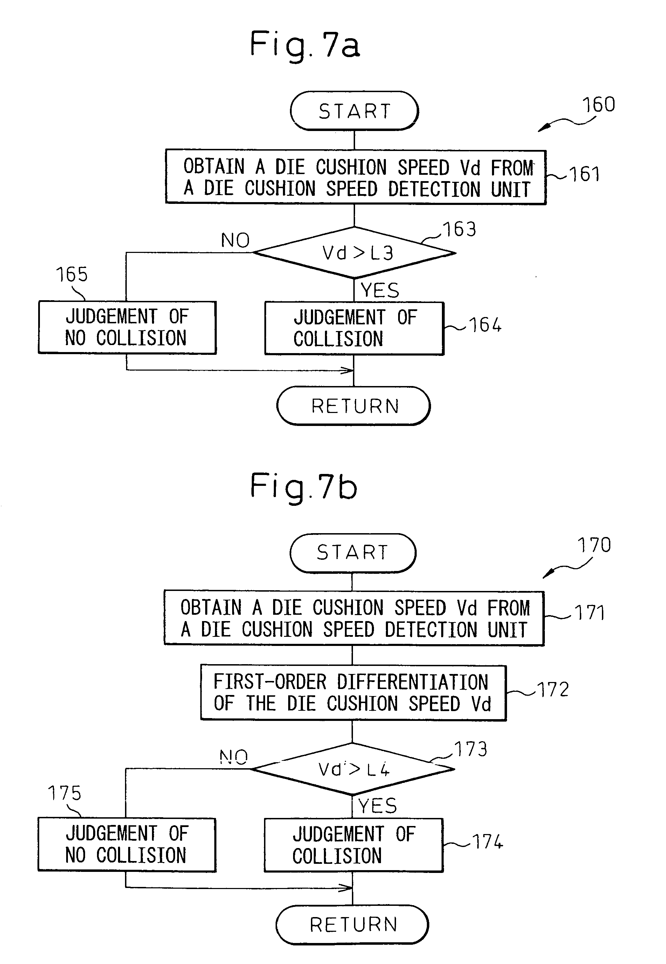

In the program 160 for judging the collision of the second embodiment shown in Fig. 7a, a speed detection value Vd of the die cushion is obtained from the die cushion speed detection unit 22 (step 161) and is compared with a threshold value L3 in the comparison operation unit 95 (step 163). Next, when the speed detection value Vd of the die cushion is greater than the threshold value L3, it is so judged that the slide 24 has collided with the die cushion (step 164). When the speed detection value Vd of the die cushion is not greater than the threshold value L3, it is so judged that no collision has taken place (step 165).

Further, in the program 170 for judging the collision of the second embodiment shown in Fig. 7b, a speed detection value Vd of the die cushion is obtained from the die cushion speed detection unit 22 (step 171) and is put through first-order differentiation through the third differentiating circuit 23c. The first-order differentiated speed detection value Vd' thus obtained is fed to the comparison operation unit 95 where it is compared with a threshold value L4 (step 173). Next, when the first-order differentiated speed detection value Vd' is greater than the threshold value L4, it is so judged that the slide 24 has collided with the die cushion (step 174). When the first-order differentiated speed detection value Vd' is not greater than the threshold value L4, it is so judged that no collision has taken place (step 175).

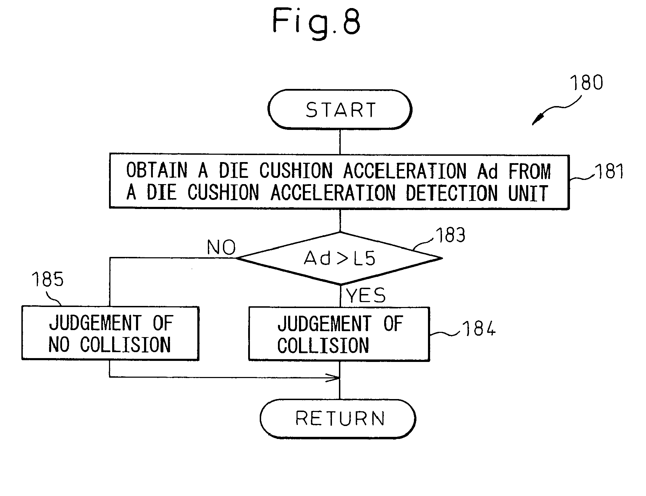

Further, in the program 180 for judging the collision of the second embodiment shown in Fig. 8, an acceleration detection value Ad of the die cushion is obtained from the die cushion acceleration detection unit 29 (step 181) and is compared with a threshold value L5 in the comparison operation unit 95 (step 183). Next, when the acceleration detection value Ad of the die cushion is greater than the threshold value L5, it is so judged that the slide 24 has collided with the die cushion (step 184). When the acceleration detection value Ad of the die cushion is not greater than the threshold value L5, it is so judged that no collision has taken place (step 185).

When the judgement of collision is rendered by the methods 160 to 180 of the second embodiment, the die cushion is changed by the switch 930 from being controlled by the position control unit 920 over to being controlled by the force control unit 940 like in the case of the first embodiment. As a result, a suitable cushion pressure is produced.

According to the second embodiment of the present invention as described above, the position control speed instruction value Vcx is not compared with the force control speed instruction value Vcf, unlike that of the prior art. Namely, the second embodiment makes it possible to judge the collision within a short period of time since it uses neither the force control speed instruction value Vcf nor the position control speed instruction value Vcx. As a result, the second embodiment makes it possible to prevent an increase in the overshooting amount of the force that stems from a delay in the judgement of collision.

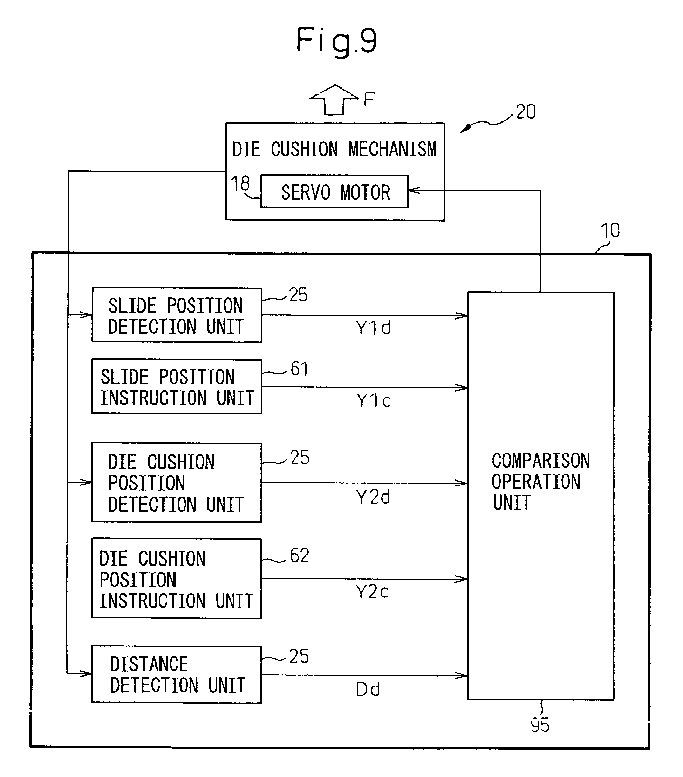

Fig. 9 is a functional block diagram illustrating the control device for the die cushion mechanism according to a third embodiment of the present invention. Referring to Fig. 9, the control device 10 based on the third embodiment includes a slide position detection unit 25 for detecting a position of the slide 24, a slide position instruction unit 61 for instructing the position of the slide 24, a die cushion position detection unit 25 for detecting a position of the die cushion, a die cushion position instruction unit 62 for instructing the position of the die cushion, and a distance detection unit 25 for detecting a distance between the slide 24 and the die cushion. Here, as described above, note that the position detection unit 25 also works as the die cushion position detection unit, as the slide position detection unit and as the distance detection unit.

The control device 10 further includes a comparison operation unit 95 which compares a slide position detection value Y1d detected by the slide position detection unit 25, a slide position instruction value Y1c instructed by the slide position instruction unit 61, a die cushion position detection value Y2d detected by the die cushion position detection unit 25, a die cushion position instruction value Y2c instructed by the die cushion position instruction unit 62, and a distance detection value Dd between the slide and the die cushion detected by the distance detection unit 25, with their respective threshold values.

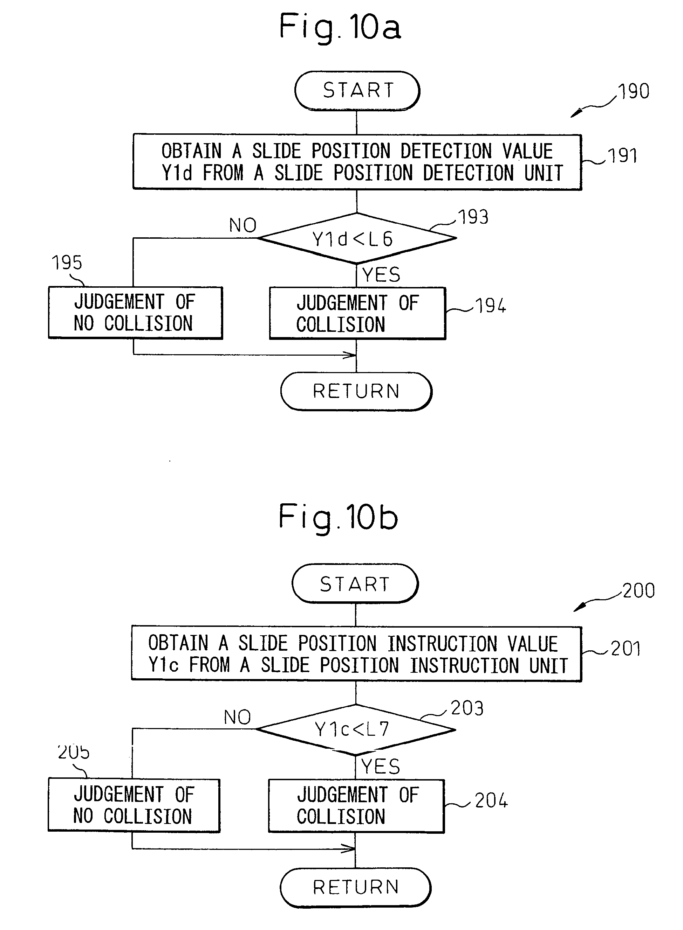

In the program 190 for judging the collision of the third embodiment shown in Fig. 10a, a slide position detection value Y1d is obtained from the slide position detection unit 25 (step 191) and is compared with a threshold value L6 in the comparison operation unit 95 (step 193). Next, when the slide position detection value Y1d is smaller than the threshold value L6, it is so judged that the slide 24 has collided with the die cushion (step 194). When the slide position detection value Y1d is not smaller than the threshold value L6, it is so judged that no collision has taken place (step 195).

Further, in the program 200 for judging the collision of the third embodiment shown in Fig. 10b, a slide position instruction value Y1c is obtained from the slide position instruction unit 61 (step 201) and is compared with a threshold value L7 in the comparison operation unit 95 (step 203). Next, when the slide position instruction value Y1c is smaller than the threshold value L7, it is so judged that the slide 24 has collided with the die cushion (step 204). When the slide position instruction value Y1c is not smaller than the threshold value L7, it is so judged that no collision has taken place (step 205).

Further, in the program 210 for judging the collision of the third embodiment shown in Fig. 11a, first, a slide position detection value Y1d is obtained from the slide position detection unit 25 (step 211). Then, after a die cushion position detection value Y2d is obtained from the die cushion position detection unit 25 (step 212), the comparison operation unit 95 compares the slide position detection value Y1d with the die cushion position detection value Y2d (step 213). Next, when the slide position detection value Y1d is smaller than or equal to the die cushion position detection value Y2d, it is so judged that the slide 24 has collided with the die cushion (step 214). When the slide position detection value Y1d is not smaller than or equal to the die cushion position detection value Y2d, it is judged that no collision has taken place (step 215).

At step 213 in the program 210 for judging the collision shown in Fig. 11a, judgement of collision may be rendered when the slide position detection value Y1d is in agreement with the die cushion position detection value Y2d (Y1d = Y2d). However, since a relatively large force is acting between the slide 24 and the die cushion, the distance may contract between the detected position of the slide 24 and the detected position of the die cushion at the time of collision to instantaneously create a condition "slide position detection value Y1d < die cushion position detection value Y2d". In this case, a judgement often cannot be rendered if the collision is judged based on "Y1d = Y2d". It is, therefore, desired to judge the collision relying upon "Y1d ≤ Y2d" as represented by step 213 in Fig. 11a.

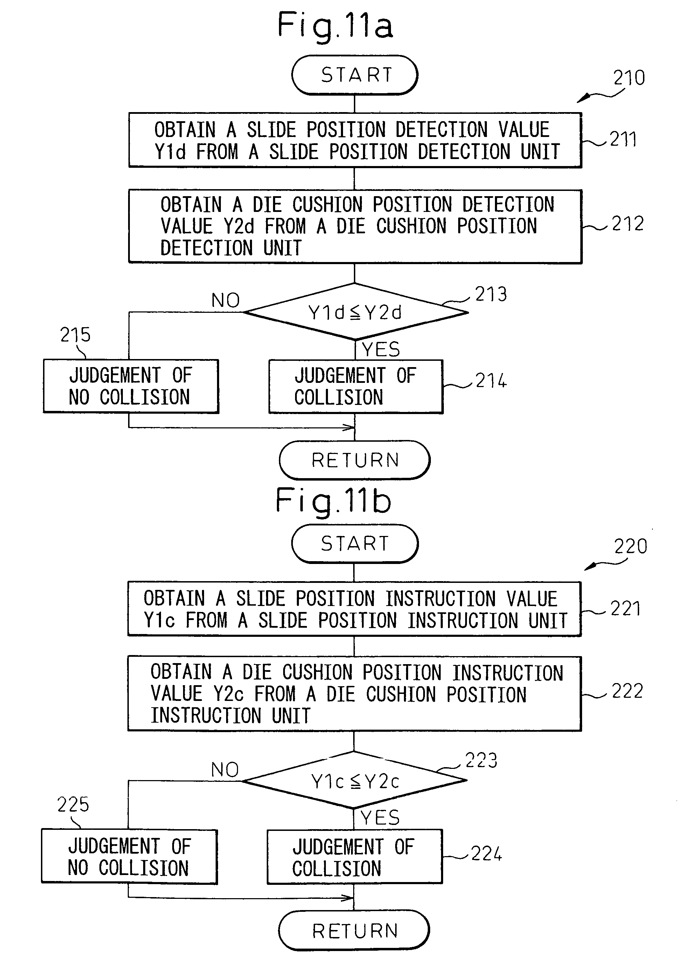

Further, in the program 220 for judging the collision of the third embodiment shown in Fig. 11b, first, a slide position instruction value Y1c is obtained from the slide position instruction unit 61 (step 221). Then, after a die cushion position instruction value Y2c is obtained from the die cushion position instruction unit 62 (step 222), the comparison operation unit 95 compares the slide position instruction value Y1c with the die cushion position instruction value Y2c (step 223). Next, when the slide position instruction value Y1c is smaller than or equal to the die cushion position instruction value Y2c, it is so judged that the slide 24 has collided with the die cushion (step 224). When the slide position instruction value Y1c is not smaller than or equal to the die cushion position instruction value Y2c, it is judged that no collision has taken place (step 225).

Similarly, at step 223 in the program 220 for judging the collision shown in Fig. 11b, judgement of collision may be rendered when the slide position instruction value Y1c is in agreement with the die cushion position instruction value Y2c (Y1c = Y2c). However, since the instruction values Y1c and Y2c formed by the slide position instruction unit 61 and the die cushion position instruction unit 62 in the control device 10 have been changed an equal numbers of times at the respective resolutions, the judgement cannot often be executed if the collision is judged based on "Y1c = Y2c". It is, therefore, desired to judge the collision relying upon "Y1c ≤ Y2c" as represented by step 223 in Fig. 11b.

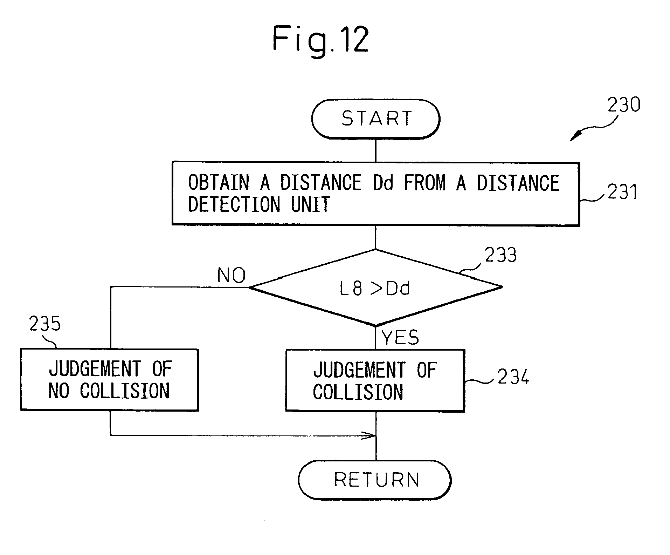

Further, in the program 230 for judging the collision of the third embodiment shown in Fig. 12, a distance Dd is obtained from the distance detection unit 25 that detects the distance Dd between the slide and the die cushion (step 231), and is compared with a threshold value L8 by the comparison operation unit 95 (step 233). Next, when the distance Dd between the slide and the die cushion is smaller than the threshold value L8, it is so judged that the slide 24 has collided with the die cushion (step 234). When the distance Dd between the slide and the die cushion is not smaller than the threshold value L8, it is judged that no collision has taken place (step 235).

When the judgement of collision is rendered by the methods 190 to 230 of the third embodiment, the die cushion is changed by the switch 930 from being controlled by the position control unit 920 over to being controlled by the force control unit 940 like in the above-mentioned embodiments. As a result, a suitable cushion pressure is produced.

According to the third embodiment of the present invention as described above, the position control speed instruction value Vcx is not compared with the force control speed instruction value Vcf, unlike that of the prior art. Namely, the third embodiment makes it possible to judge the collision within a short period of time because it uses neither the force control speed instruction value Vcf nor the position control speed instruction value Vcx. As a result, the third embodiment makes it possible to prevent an increase in the overshooting amount of the force that stems from a delay in the judgement of collision.

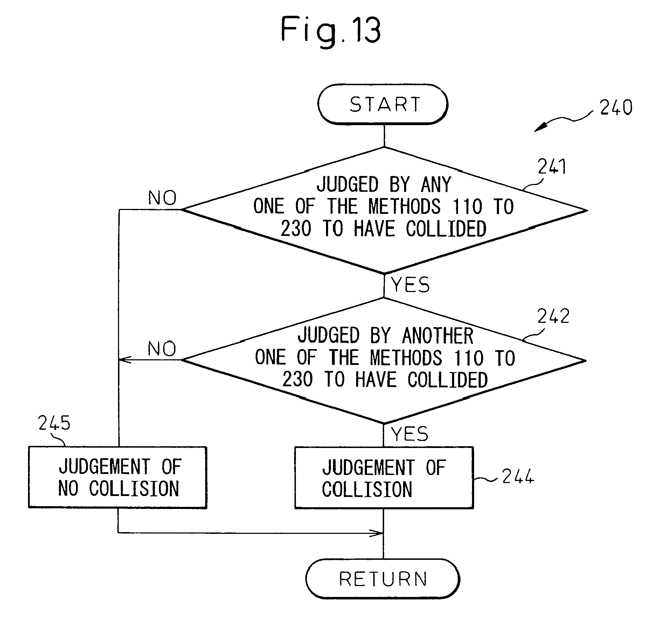

Here, the programs (methods) 110 to 230 for judging the collision according to the first to third embodiments can be executed within a shorter times than those of the conventional judging methods. Therefore, there may be executed some of the programs (methods) 110 to 230 for judging the collision. Fig. 13 is a flowchart of a program illustrating the operation of a system for judging the collision based on the present invention. In the program 240 shown in Fig. 13, first, there is executed any one of the programs (methods) 110 to 230 for judging the collision (step 241). When the judgement of collision is rendered, there is executed another method of the programs (methods) 110 to 230 for judging the collision (step 242). When the judgement of collision is rendered by another method, the routine proceeds to step 244 where the judgement of collision is rendered in the system for judging the collision according to the program 240. On the other hand, when the judgement of collision is rendered at step 241 but when the judgement of collision is not rendered at step 242, it is probable that an erroneous judgement is rendered. Therefore, the system for judging the collision according to the program 240 does not render a judgement of collision (step 245).

In the system for judging the collision shown in Fig. 13 as described above, there are executed at least two of the programs (methods) 110 to 230 for judging the collision. When the judgement of collision is rendered in both programs for judging the collision, the system for judging the collision renders the judgement of collision. Therefore, the system for judging the collision illustrated in Fig. 13 enhances the reliability of judgement of collision as compared to the judgement based on any one of the programs (methods) 110 to 230 for judging the collision, and makes it possible to avoid, as much as possible, an occurrence that the press work cannot be executed due to erroneous judgement.

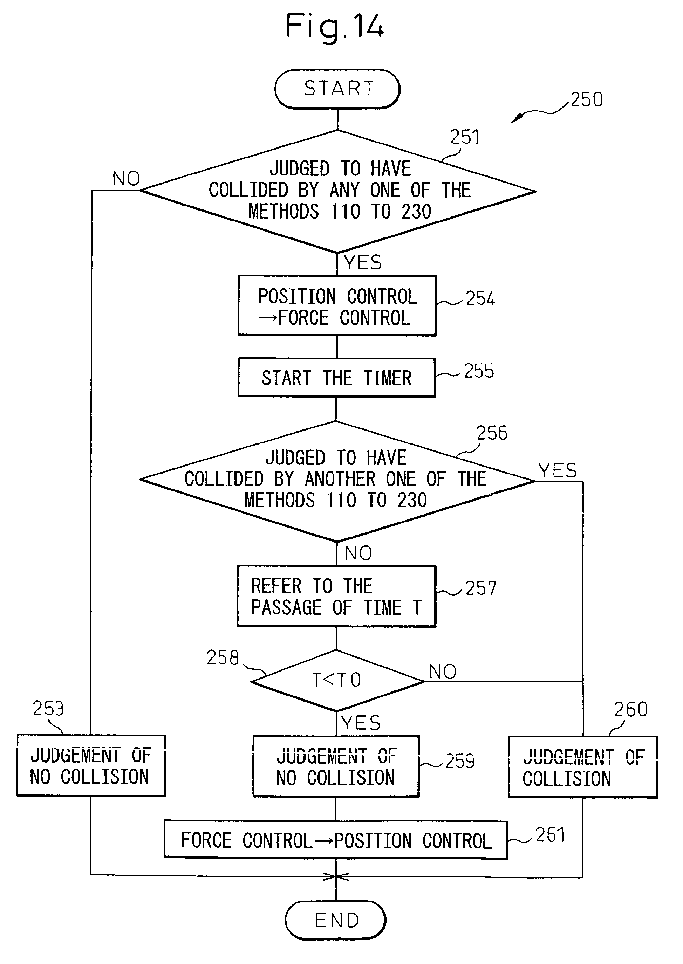

Fig. 14 is another flowchart illustrating the operation of the system for judging the collision according to the present invention. In the program 250 shown in Fig. 14, too, there is, first, executed any one of the programs (methods) 110 to 230 for judging the collision according to the first to third embodiments (step 251). When the judgement of collision is rendered, therefore, the switch 930 changes the position control unit 920 over to the force control unit 940 (step 254). Therefore, the switching operation is carried out more quickly by the switch 930 than in the case of the system for judging the collision shown in Fig. 13.

Next, the timer is driven simultaneously with the switching operation by the switch 930 to record the passage of time T after the switching operation (step 255). The timer, that is not shown, has been incorporated in the control device 10.

After the start of the timer, there is executed another one of the programs (methods) 110 to 230 for judging the collision at step 256. When the judgement of collision is rendered by another method, the judgement of collision is rendered by the system of judging the collision shown in Fig. 14 (step 260). In this case, it is judged that the switching operation by the switch 930 at step 254 was proper. Therefore, the processing ends without executing an additional operation of the switch 930.

When the judgement of collision is not rendered at step 256, on the other hand, reference is made to the passage of time T (step 257) to judge whether the passage of time T is shorter than a predetermined value T0 (step 258). The passage of time T is from after the end of the method of judging the collision at step 251 until after the end of the method of judging the collision at step 256. When the passage of time T is shorter than the predetermined period of time T0, it is so judged that the judgement at step 256 was executed within the predetermined period of time T0 after step 251. Therefore, it is so taken that the judgement of no collision at step 256 was proper, the judgement of collision at step 251 was erroneous and, hence, the judgement of no collision is rendered by the system for judging the collision shown in Fig. 14 (step 259). In this case, no switching operation of the switch 930 is necessary at step 254. At step 261, therefore, the force control unit 940 is changed over back to the position control unit 920. This constitution helps prevent the occurrence of an erroneous judgement.

When the passage of time T is not shorter than the predetermined value T0 at step 258, it means that the method of judging the collision was not executed within the predetermined period of time at step 256. Therefore, the judgement of collision at step 256 is not employed, and the routine proceeds to step 260 to end the processing. Further, when the judgement of collision is not rendered at step 251, the routine proceeds to step 253 to end the processing without executing the switching operation of the switch 930.

The system for judging the collision described with reference to Figs. 13 and 14 executes two of the programs (methods) 110 to 230 for judging the collision. However, the system for judging the collision may employ a further increased number of programs 110 to 230 for judging the collision to further enhance the reliability of the result of judging the collision.

Though the invention was described above by way of typical embodiments, it will be comprehended that a person skilled in the art may further pursue the above-mentioned modifications, various other modifications, omissions and additions without departing from the scope of the invention.

## Claims

1. A device (110) for judging the collision of a slide (24) with a die cushion in a die cushion mechanism (20) which produces a force against the slide (24) in a press machine using a servo motor (18) as a drive source, comprising:
force detection means (21) for detecting a force produced between said die cushion (20) and said slide (24); and
comparator means (95) for comparing a force detection value (Fd) detected by said force detection means (21) with a predetermined threshold value (L1);
wherein, when said force detection value (Fd) becomes greater than said threshold value (L1), it is so judged that said slide (24) has come into collision with said die cushion (20).

2. A device (120) for judging the collision of a slide (24) with a die cushion (20) in a die cushion mechanism (20) which produces a force against the slide (24) in a press machine using a servo motor (18) as a drive source, comprising:
force detection means (21) for detecting a force produced between said die cushion (20) and said slide (24); and
comparator means (95) for comparing a force detection value (Fd) detected by said force detection means (21) with a force detection value (Fd0) before the operation detected by said force detection means (21) before the operation of said die cushion (20);
wherein, when said force detection value (Fd) becomes greater than said force detection value (Fd0) of before the operation, it is so judged that said slide (24) has come into collision with said die cushion (20).

3. A device (130) for judging the collision of a slide (24) with a die cushion (20) in a die cushion mechanism (20) which produces a force against the slide (24) in a press machine using a servo motor (18) as a drive source, comprising:
force detection means (21) for detecting a force produced between said die cushion (20) and said slide (24); and
comparator means (95) for comparing a first-order differentiated value (Fd') of the force detection value (Fd) detected by said force detection means (21) with a predetermined threshold value (L2);
wherein, when said first-order differentiated value (Fd') becomes greater than said threshold value (L2), it is so judged that said slide (24) has come into collision with said die cushion (20).

4. A device (140) for judging the collision of a slide (24) with a die cushion (20) in a die cushion mechanism (20) which produces a force against the slide (24) in a press machine using a servo motor (18) as a drive source, comprising:
force detection means (21) for detecting a force produced between said die cushion (20) and said slide (24); and
comparator means (95) for comparing a second-order differentiated value (Fd") of the force detection value (Fd) detected by said force detection means (21) with a predetermined threshold value (L3);
wherein, when said second-order differentiated value (Fd") becomes greater than said threshold value (L3), it is so judged that said slide (24) has come into collision with said die cushion (20).

5. A device (150) for judging the collision of a slide (24) with a die cushion (20) in a die cushion mechanism (20) which produces a force against the slide (24) in a press machine using a servo motor (18) as a drive source, comprising:
force instruction means (51) for instructing a force to be produced between said die cushion (20) and said slide (24);
force detection means (21) for detecting a force produced between said die cushion (20) and said slide (24); and
comparator means (95) for comparing a force detection value (Fd) detected by said force detection means (21) with a force instruction value (Fc) instructed by said force instruction means (51);
wherein, when said force detection value (Fd) becomes greater than said force instruction value (Fc), it is so judged that said slide (24) has come into collision with said die cushion (20).

6. A device (160) for judging the collision of a slide (24) with a die cushion (20) in a die cushion mechanism (20) which produces a force against the slide (24) in a press machine using a servo motor (18) as a drive source, comprising:
speed detection means (22) for detecting a speed of said die cushion (20); and
comparator means (95) for comparing a speed detection value (Vd) detected by said speed detection means (22) with a predetermined threshold value (L3);
wherein, when said speed detection value (Vd) becomes greater than said threshold value (L3), it is so judged that said slide (24) has come into collision with said die cushion (20).

7. A device (170) for judging the collision of a slide (24) with a die cushion (20) in a die cushion mechanism (20) which produces a force against the slide (24) in a press machine using a servo motor (18) as a drive source, comprising:
speed detection means (22) for detecting a speed of said die cushion (20); and
comparator means (95) for comparing a first-order differentiated value (Vd') of the speed detection value (Vd) detected by said speed detection means (22) with a predetermined threshold value (L4);
wherein, when said first-order differentiated value (Vd') becomes greater than said threshold value (L4), it is so judged that said slide (24) has come into collision with said die cushion (20).

8. A device (180) for judging the collision of a slide (24) with a die cushion (20) in a die cushion mechanism (20) which produces a force against the slide (24) in a press machine using a servo motor (18) as a drive source, comprising:
acceleration detection means (29) for detecting an acceleration of said die cushion (20); and
comparator means (95) for comparing an acceleration detection value (Ad) detected by said acceleration detection means (29) with a predetermined threshold value (L5);
wherein, when said acceleration detection value (Ad) becomes greater than said threshold value (L5), it is so judged that said slide (24) has come into collision with said die cushion (20).

9. A device (190) for judging the collision of a slide (24) with a die cushion (20) in a die cushion mechanism (20) which produces a force against the slide (24) in a press machine using a servo motor (18) as a drive source, comprising:
slide position detection means (25) for detecting a position of said slide (24); and
comparator means (95) for comparing a slide position detection value (Y1d) detected by said slide position detection means (25) with a predetermined threshold value (L6);
wherein, when said slide position detection value (Y1d) becomes smaller than said threshold value (L6), it is so judged that said slide (24) has come into collision with said die cushion (20).

10. A device (200) for judging the collision of a slide (24) with a die cushion (20) in a die cushion mechanism (20) which produces a force against the slide (24) in a press machine using a servo motor (18) as a drive source, comprising:
slide position instruction means (61) for instructing a position of said slide (24); and
comparator means (95) for comparing a slide position instruction value (Y1c) instructed by said slide position instruction means (61) with a predetermined threshold value (L7);
wherein when said slide position instruction value (Y1c) becomes smaller than said threshold value (L7), it is so judged that said slide (24) has come into collision with said die cushion (20).

11. A device (230) for judging the collision of a slide (24) with a die cushion (20) in a die cushion mechanism (20) which produces a force against the slide (24) in a press machine using a servo motor (18) as a drive source, comprising:
distance detection means (25) for detecting a distance between said die cushion (20) and said slide (24); and
comparator means (95) for comparing a distance (Dd) detected by said distance detection means (25) with a predetermined threshold value (L8);
wherein, when said distance (Dd) becomes smaller than said threshold value (L8), it is so judged that said slide (24) has come into collision with said die cushion (20).

12. A device (210) for judging the collision of a slide (24) with a die cushion (20) in a die cushion mechanism (20) which produces a force for the slide (24) in a press machine using a servo motor (18) as a drive source, comprising:
slide position detection means (25) for detecting a position of said slide (24);
die cushion position detection means (25) for detecting a position of said die cushion (20); and
comparator means (95) for comparing a slide position detection value (Y1d) detected by said slide position detection means (25) with a die cushion position detection value (Y2d) detected by said die cushion position detection means (25);
wherein, when said slide position detection value (Y1d) becomes smaller than said die cushion position detection value (Y2d), it is so judged that said slide (24) has come into collision with said die cushion (20).

13. A device (210) for judging the collision of a slide (24) with a die cushion (20) in a die cushion mechanism (20) which produces a force against the slide (24) in a press machine using a servo motor (18) as a drive source, comprising:
slide position detection means (25) for detecting a position of said slide (24);
die cushion position detection means (25) for detecting a position of said die cushion (20); and
comparator means (95) for comparing a slide position detection value (Y1d) detected by said slide position detection means (25) with a die cushion position detection value (Y2d) detected by said die cushion position detection means (25);
wherein, when said slide position detection value (Y1d) becomes in agreement with said die cushion position detection value (Y2d), it is so judged that said slide (24) has come into collision with said die cushion (20).

14. A device (220) for judging the collision of a slide (24) with a die cushion (20) in a die cushion mechanism (20) which produces a force against the slide (24) in a press machine using a servo motor (18) as a drive source, comprising:
slide position instruction means (61) for instructing a position of said slide (24);
die cushion position instruction means (62) for instructing a position of said die cushion (20); and
comparator means (95) for comparing a slide position instruction value (Y1c) instructed by said slide position instruction means (61) with a die cushion position instruction value (Y2c) instructed by said die cushion position instruction means (62);
wherein, when said slide position instruction value (Y1c) becomes smaller than said die cushion position instruction value (Y2c), it is so judged that said slide (24) has come into collision with said die cushion (20).

15. A device (250) for judging the collision of a slide (24) with a die cushion (20) in a die cushion mechanism (20) which produces a force against the slide (24) in a press machine using a servo motor (18) as a drive source, comprising:
slide position instruction means (61) for instructing a position of said slide (24);
die cushion position instruction means (62) for instructing a position of said die cushion (20); and
comparator means (95) for comparing a slide position instruction value (Y1c) instructed by said slide position instruction means (61) with a die cushion position instruction value (Y2c) instructed by said die cushion position instruction means (62);
wherein, when said slide position instruction value (Y1c) becomes in agreement with said die cushion position instruction value (Y2c), it is so judged that said slide (24) has come into collision with said die cushion (20).

16. A system for judging the collision, comprising:
at least any one of the devices (110 to 230) for judging the collision of claims 1 to 15; and
at least another one of the devices (110 to 230) for judging the collision of claims 1 to 15;
wherein, when the at least any one of the devices for judging the collision and the at least another one of the devices for judging the collision have rendered the judgement of collision, it is so judged that said slide (24) has come into collision with said die cushion (20).

17. A system for judging the collision, comprising:
any one of the devices (110 to 230) for judging the collision of claims 1 to 15;
another one of the devices (110 to 230) for judging the collision of claims 1 to 15; and
switching means (930) for changing a position control unit that controls said slide (24) depending upon a position of said slide (24) over to a force control unit that controls said slide (24) depending upon a force acting on said slide (24);
wherein, when said another one of the devices for judging the collision is not rendering the judgement of collision after said switching means (930) has changed said position control unit over to said force control unit as a result of the judgement of collision rendered by the any one of said devices for judging the collision, it is so judged that said slide (24) has not collided with said die cushion (20), and said switching means (930) changes said force control unit over to said position control unit.
